# EUROPÄISCHE PATENTSCHRIFT

(11) **EP 0 659 110 B1**
(45) Veröffentlichungstag und Bekanntmachung des Hinweises auf die Patenterteilung: **19.03.1997**
(21) Anmeldenummer: 93919298.5
(22) Anmeldetag: 08.09.1993
(51) Int. Cl.: B23B 31/02

(54) **SPANNVORRICHTUNG ZUM VERBINDEN VON MASCHINENSPINDELN MIT WERKZEUGHALTERN**
CLAMPING DEVICE FOR CONNECTING MACHINE SPINDLES TO TOOL HOLDERS
DISPOSITIF DE SERRAGE POUR LE RACCORDEMENT DE BROCHES DE MACHINE A DES PORTE-OUTILS

(30) Priorität: 10.09.1992 DE 9212205 U
(43) Veröffentlichungstag der Anmeldung: 28.06.1995
(73) Patentinhaber: GILDEMEISTER - DEVLIEG SYSTEM-WERKZEUGE GMBH, D-33689 Bielefeld (DE)
(72) Erfinder: SCHÜRFELD, Horst, D-33605 Bielefeld (DE)
(74) Vertreter: Steinmeister, Helmut, Dipl.-Ing.
(86) Internationale Anmeldenummer: EP9302427
(87) Internationale Veröffentlichungsnummer: WO9405451

(56) Entgegenhaltungen:
- EP-A- 0 310 942
- EP-A- 0 332 036
- WO-A-85/03467
- DE-U- 8 533 253
- US-A- 2 485 799

## Beschreibung

Die Erfindung betrifft eine Spannvorrichtung zum Verbinden von Maschinenspindeln oder Grundhaltern mit Werkzeughaltern oder Werkzeugen für die spanabhebende Industrie, mit zwei spreizbaren Spannstücken, die in einer in der Maschinenspindel oder dem Grundhalter verankerten Halterung radial verschiebbar geführt sind und in der gespreizten Stellung eine umlaufende Schulter im Inneren des Werkzeughalters hintergreifen.

Zum Festlegen von Werkzeughaltern oder Werkzeugen in Maschinenspindeln oder Grundhaltern sind verschiedene, radial spreizbare Spannvorrichtungen bekannt. Beispiele zeigen die EP-B 0 172 850 und die WO 88/05358. Das gilt auch in bezug auf Werkzeughalter mit kegeligen Hohlschäften gemäß DIN 69893. Spannvorrichtungen dieser Art sollen nach Möglichkeit sowohl automatisch als auch manuell betätigbar sein.

Ein Nachteil einiger bekannter Lösungen besteht darin, daß die gespreizten Spannstücke die Spannschulter des Werkzeughalters im wesentlichen nur an zwei gegenüberliegenden Punkten hintergreifen. Das bedeutet, daß die Verbindung nur in der durch die beiden Punkte gehenden Axialebene eine hohe Biegesteifigkeit aufweist, während die Biegesteifigkeit bei Biegekräften in Richtungen außerhalb der genannten Ebene unzureichend sein kann.

Die gleichmäßige Spreizung von mehr als zwei Spannstücken ist mit vertretbarem Aufwand kaum zu realisieren. Werden andererseits die Spannstücke mit bogenförmigen Spannflächen versehen, die an die Ringform der Spannschulter des Werkzeughalters angepaßt sind, so wird es in der Regel nicht möglich sein, die Spannschulter, die Spannstücke, den Spreizmechanismus und die gegenseitige Zuordnung dieser Teile so genau auszubilden, daß es zu einer vollflächigen Anlage der Spannflächen gegen die Spannschulter mit im wesentlichen gleichem Druck kommt. Die Kraftübertragung wird daher auch in diesem Falle ganz oder zumindest weit überwiegend über einzelne, bestimmte Punkte erfolgen, auf deren Lage der Hersteller keinen Einfluß hat.

Der Erfindung liegt daher die Aufgabe zugrunde, eine Spannvorrichtung der gattungsgemäßen Art zu schaffen, die eine möglichst gleichmäßig auf dem Umfang verteilte Kraftübertragung zwischen der Maschinenspindel und dem Werkzeughalter und damit eine hohe Biegesteifigkeit der Verbindung zwischen beiden gewährleistet.

Diese Aufgabe wird erfindungsgemäß bei einer Spannvorrichtung der obigen Art dadurch gelöst, daß sich die Spannstücke quer zur Längsrichtung des Werkzeughalters erstrecken und an den seitlich-äußeren Enden Spannflächen aufweisen, die derart angeordnet sind, daß die insgesamt vier Spannflächen der beiden Spannstücke jeweils in Winkelabständen von etwa 90° auf dem Umfang der Spannschulter verteilt sind.

Da jedes der Spannstücke zwei Spannflächen aufweist, ist gewährleistet, daß sich die Spannstücke beim Spannen automatisch derart einstellen, daß über beide Spannflächen im wesentlichen die gleiche Kraft übertragen wird. Das gilt auch für die Kraftverteilung zwischen den beiden Spannstücken. Es kommt daher eine sehr gleichförmige Verteilung der übertragenen Kraft auf den Umfang zustande, und die Biegesteifigkeit der Verbindung ist hoch.

Vorzugsweise ist zur Spreizung der Spannstücke eine Differentialgewindespindel vorgesehen.

Die Differentialgewindespindel weist an einem Ende einen Innensechskant oder eine andere Einrichtung zum Ansetzen eines Werkzeuges auf. Das Werkzeug wird durch fluchtende Radialbohrungen in dem Werkzeughalter und der Maschinenspindel eingeführt.

Die Spannstücke werden vorzugsweise in gegenüberliegenden Taschen der Halterung radial verschiebbar geführt. Die Taschen sind durch eine radiale Durchgangsbohrung verbunden, in der die Differentialgewindespindel liegt.

Angesichts des sehr flachen Kegels, den Werkzeughalter der vorliegenden Art in der Regel aufweisen, ist die Verbindung zwischen dem Werkzeughalter und der Maschinenspindel selbsthemmend. Vorteilhaft sind daher Einrichtungen zum Ausstoßen des Werkzeughalters nach dem Lösen der Verspannung.

Zu diesem Zwecke weisen die Spannstücke der vorliegenden Erfindung Schrägflächen auf, die beim Zusammenziehen auf achsparallele, längsverschiebbar in der Halterung angeordnete Stifte auflaufen, die auf den Werkzeughalter im Sinne eines Ausstoßens einwirken, wenn die Spannstücke zusammengezogen sind.

Alternativ ist als Spreizeinrichtung für die Spannstücke ein Exzenternocken vorgesehen, der drehbar zwischen den Spannstücken liegt und zwei gegenüberliegende Nockenflächen aufweist. Die Spreizung der Spannstücke mit Hilfe eines Exzenters hat gegenüber der Differentialgewindespindel den Vorteil, daß der Exzenter nur um höchstens 90° gedreht werden muß. Bei einer Differentialgewindespindel sind dagegen stets mehrere volle Umdrehungen zur Erzielung der Spreizung der Spannstücke notwendig. Das ist vor allem dann nachteilig, wenn die Betätigung des Spannmechanismus in einer schwer zu erreichenden oder durch andere Bauteile eingeengten Position erfolgen muß.

Im Gegensatz zu der zuvor erläuterten Differentialgewindespindel ist ein Exzenternocken nicht in der Lage, einen nach innen gerichteten Zug zum Lösen der Spannbacken auszuüben. Erfindungsgemäß ist der Exzenter daher mit wenigstens zwei radial vorspringenden Klauen verbunden, die derart in hinterschnittene Taschen auf der Innenseite der Spannstücke eintreten, daß sie beim Lösen des Exzenternocken eine radial nach innen gerichtete Zugwirkung auf die Spannstücke ausüben. Die Spannstücke müssen vollständig in die Kontur der Halterung zurückgezogen sein, damit der Werkzeughalter aus der Spindel herausgezogen werden kann.

Die Spannstücke werden radial verschiebbar in dieser Halterung geführt. Da der Exzenternocken im Gegensatz zu der Differentialgewindespindel nicht ständig mit den Spannstücken verbunden ist, ist seine Lage im Inneren der Halterung zwischen den Spannstücken nicht ausreichend bestimmt. Daher sind zwei Laschen vorgesehen, die die Ausnehmung überbrücken, an beiden Enden mit der Halterung verbunden sind und im Mittelbereich die Achse des Exzenternocken tragen. Die Verbindung zwischen den Laschen und der Halterung oder auch zwischen den Laschen und dem Exzenternocken weist ein geringes Spiel auf, damit sich der Exzenternocken selbsttätig zwischen den beiden Spannstücken einstellen kann.

Angesichts dieser Lagefixierung kann der Exzenternocken auch dazu verwendet werden, den Werkzeughalter in der gelösten Position der Spannstücke aus der Maschinenspindel auszustoßen. Zu diesem Zweck ist in der Bewegungsbahn einer der Nockenflächen bei deren Bewegung während des Lösens der Spannstücke wenigstens eine Schrägfläche an dem Werkzeughalter ausgebildet, auf die die Nockenfläche aufläuft.

Die Betätigung des Exzenternockens erfolgt - ähnlich wie bei der Differentialgewindespindel - mit Hilfe einer Eingriffseinrichtung an wenigstens einem stirnseitigen Ende des Exzenternockens, die das Ansetzen eines Werkzeugs, beispielsweise eines Innensechskant-Schlüssels, gestattet. In der Maschinenspindel und dem Werkzeughalter sind in axialer Verlängerung des Exzenternockens miteinander fluchtende radiale Bohrungen vorgesehen, die das Einführen des Werkzeugs ermöglichen.

Im folgenden werden bevorzugte Ausführungsbeispiele der Erfindung anhand der beigefügten Zeichnung näher erläutert.
- Fig. 1: ist ein Längsschnitt durch eine erfindungsgemäße Spannvorrichtung in Verbindung mit Teilen einer Maschinenspindel und eines Werkzeughalters;
- Fig. 2: ist ein Schnitt entlang der Linie 2-2 in Fig. 1;
- Fig. 3: ist ein Längsschnitt durch eine andere Ausführungsform der Erfindung;
- Fig. 4: zeigt einen Querschnitt zu Fig. 3;
- Fig. 5: ist eine vergrößerte schematische Ansicht eines Exzenternockens;
- Fig. 6 und 7: sind Längsschnitt und Querschnitt entsprechend Fig. 3 und 4, zeigen jedoch die gespannte Stellung eines Werkzeughalters;
- Fig. 8: entspricht Fig. 5 und zeigt den Exzenternocken in der entsprechenden Position.

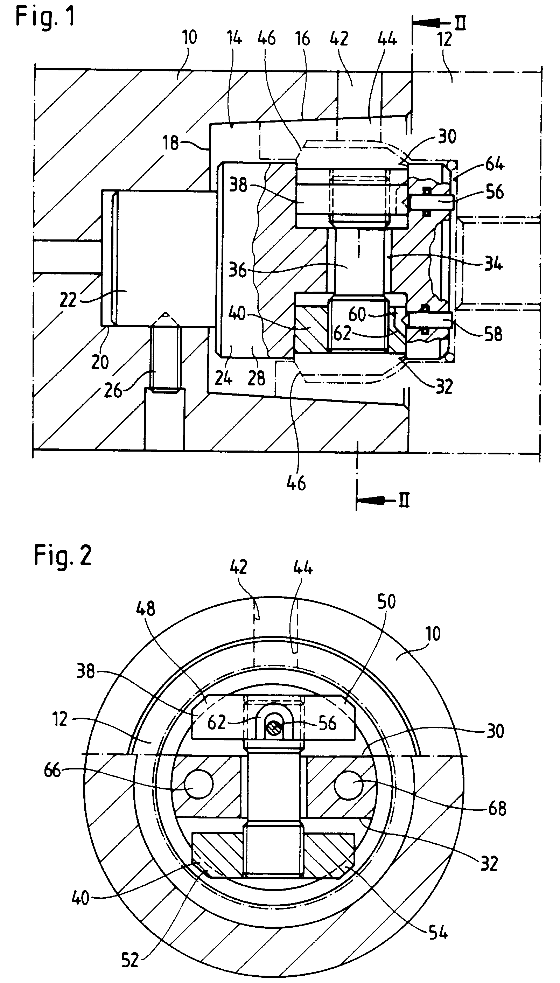

Fig. 1 zeigt im Längsschnitt die zusammenwirkenden Bereiche einer Maschinenspindel 10 und eines Werkzeughalters 12. Im weiteren Verlauf der Beschreibung soll nur von Maschinenspindeln und Werkzeughaltern gesprochen werden, jedoch können an deren Stelle ein Grundhalter einerseits und ein Werkzeug andererseits treten. Der Werkzeughalter 10 weist einen flachen Innenkegel 14 auf, in den ein entsprechender Außenkegel 16 des Werkzeughalters 12 eintritt. Von einer mit 18 bezeichneten Grundfläche des Innenkegels 14 geht eine konzentrische Sackbohrung 20 kleineren Durchmessers aus.

In der Sackbohrung 20 liegt ein zylindrischer Zapfen 22 einer insgesamt mit 24 bezeichneten Halterung einer später erläuterten Spannvorrichtung. Der Zapfen 22 ist mit Hilfe radial angeordneter, von außen in die Maschinenspindel 10 eingeschraubter Stiftschrauben 26 in der Sackbohrung 20 festgelegt. Innerhalb des Innenkegels 14 erweitert sich die Halterung 24 zu einem zylindrischen Abschnitt 28, in dessen Mittelbereich sich zwei radial gegenüberliegende Taschen 30,32 befinden, die durch eine durchgehende Radialbohrung 34 verbunden sind. In der Radialbohrung 34 liegt eine Differentialgewindespindel 36 mit zwei nicht bezeichneten, gegenläufigen Gewindeabschnitten an beiden Enden. Diese Gewindeabschnitte sind in zwei blockförmige Spannstücke 38,40 eingeschraubt, die in den erwähnten Taschen 30,32 der Halterung 24 radial verschiebbar geführt sind. Bei Drehung der Differentialgewindespindel 36 werden die Spannstücke 38 daher innerhalb der Taschen 30,32 radial verschoben und damit gespreizt oder zusammengezogen.

Zur Erzeugung dieser Drehung weist die Differentialgewindespindel 36 an dem in Fig. 1 oben liegenden Ende einen nicht gezeigten Innensechskant oder dergleichen auf, der mit Hilfe eines entsprechenden Werkzeugs durch zwei miteinander fluchtende, radiale Bohrungen 42,44 in der Maschinenspindel 10 und dem Werkzeughalter 12 zugänglich ist.

Wie Fig. 2 zeigt, besitzen die Spannstücke 38,40 eine in Querrichtung langgestreckte Form. Dies führt dazu, daß die Spannstücke nur an ihren beiden seitlich äußeren Enden bzw. Ecken in gespreizter Stellung in Eingriff mit einer nach innen vorspringenden Spannschulter 46 geraten, die entsprechend der genannten Norm innerhalb von Werkzeughaltern der in Rede stehenden Art vorgesehen ist. Dadurch ergeben sich insgesamt vier Spannflächen 48,50,52,54 an den beiden Spannstücken 38,40, die gleichmäßig über den Umfang der Spannschulter 46 verteilt sind. Dadurch wird eine sehr gleichmäßige Verteilung der Kraftübertragung erreicht. Zudem besitzt die Verbindung eine hohe Biegesteifigkeit.

Aus Fig. 1 geht hervor, daß die Spannschulter 46 des Werkzeughalters 12 schräg nach innen gerichtet ist. Die Spannflächen der Spannstücke 38,40 besitzen eine entsprechende Abschrägung. Auf diese Weise wird bei einer radialen Spreizung der Spannstücke 38,40 der Außenkonus 16 des Werkzeughalters in den Innenkonus 14 der Maschinenspindel nach links in Fig. 1 hineingezogen. Im übrigen legt sich der nicht dargestellte, an den Innenkonus des Werkzeughalters anschließende Flansch fest gegen die ringförmige Stirnfläche der Maschinenspindel.

In dem, bezogen auf Fig. 1, rechts der Taschen 30,32 liegenden Bereich der Halterung 24 sind in achsparallelen Bohrungen verschiebbare Stifte 56,58 angeordnet. Die Stifte weisen nach links in Fig. 1 ein kegelförmiges oder abgerundetes Ende auf. Auf der den Stiften 56,58 zugewandten Seite weisen die Spannstücke 38,40 Ausnehmungen 60 auf, in die die Stifte 46,48 nach links in Fig. 1 eintreten können. Die Ausnehmungen 60 sind zur radial äußeren Seite durch Schrägflächen 62 begrenzt. Wenn die Spannstücke 38,40 zusammengezogen werden, laufen die Schrägflachen 62 auf die Stifte 56,58 auf und verschieben die Stifte nach rechts in Fig. 1. Dort treffen die Stifte auf einen inneren Boden 64 des Werkzeughalters, so daß sie einen Druck nach rechts in Fig. 1 auf den Werkzeughalter ausüben. Dadurch wird die selbsthaftende Verbindung zwischen dem Innenkegel 14 und dem Außenkegel 16 gelöst.

Fig. 1 zeigt, daß in der Halterung 24 achsparallele Kühlmittelbohrungen 66. 68 vorgesehen sind, die es gestatten, ein Kühlmittel durch die Maschinenspindel hindurch zum Werkzeug zu führen.

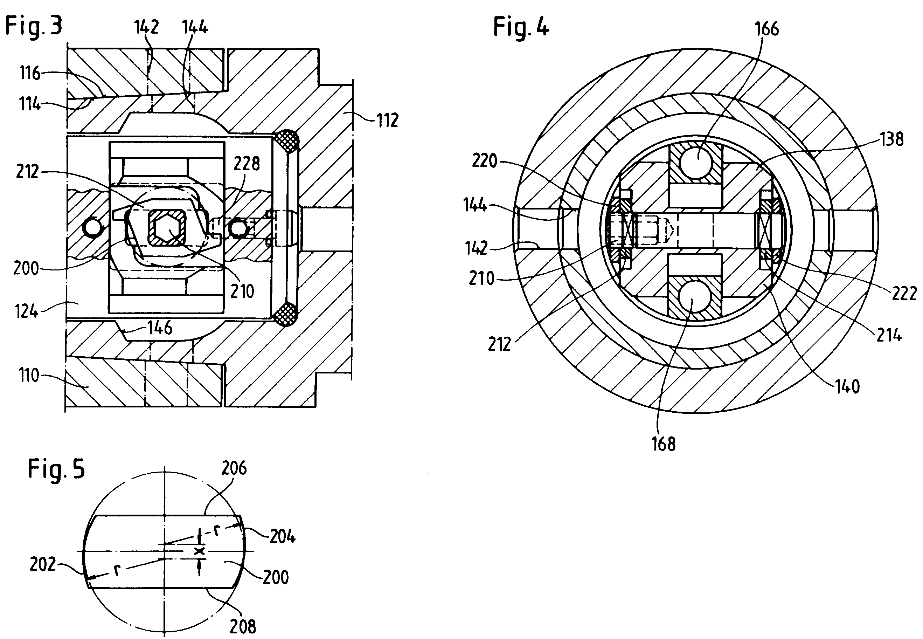

Nunmehr soll anhand von Fig. 3 bis 6 eine andere Ausführungsform der Erfindung beschrieben werden, bei der die Spreizung der Spannstücke mit Hilfe eines Exzenters erfolgt. Zur Vereinfachung sollen die Teile der zweiten Ausführungsform, die mit entsprechenden Teilen der ersten Ausführungsform übereinstimmen, lediglich mit einer um "100" erhöhten Bezugsziffer versehen und nicht mehr im einzelnen erläutert werden.

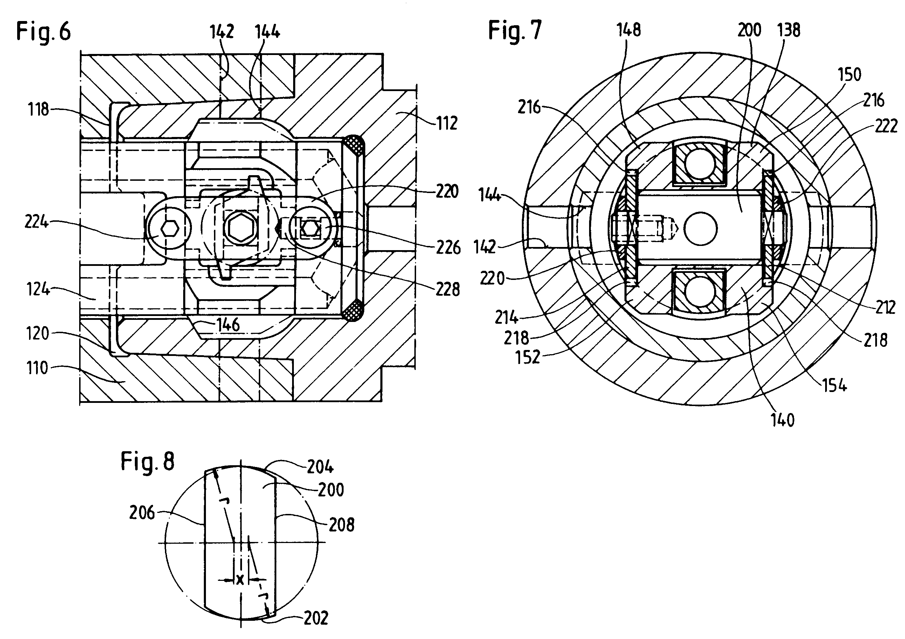

Somit zeigen Fig. 3 bis 6 eine Maschinenspindel 110 mit einem Werkzeughalter 112. In der Maschinenspindel ist in der bereits dargestellten Weise eine Halterung 124 verankert. Der Außenkegel 116 des Werkzeughalters 112 trifft beim Einschieben in die Maschinenspindel mit dem Innenkegel 114 der Maschinenspindel zusammen. Dabei tritt die Halterung 124 in eine entsprechende geformte Ausnehmung im Inneren des Werkzeughalters 112 ein. In dieser Ausnehmung ist im übrigen eine umlaufende Spannschulter 146 ausgebildet. Etwa in gleicher Höhe liegen in einer nicht gezeichneten Ausnehmung der Halterung 124 die beiden spreizbaren Spannstücke 138,140, die gemäß Fig. 4 und 7 wiederum die bereits geschilderten vier im Winkelabstand von ca. 90° liegenden Spannflächen 148,150,152,154 aufweisen.

Die Maschinenspindel 110 und der Werkzeughalter 112 weisen wiederum auf diametral gegenüberliegenden Seiten miteinander fluchtende Bohrungen 142,144 auf, die jedoch gegenüber der Ausführungsform gemäß Fig. 1 und 2 um 90° versetzt und in Fig. 3 und 6 auch nur in der Position der ersten Ausführungsform strichpunktiert angedeutet sind. Die Bohrungen dienen unter anderem zur Aufnahme eines Werkzeugs für die Verspannung des Werkzeughalters.

Die Spreizung der Spannstücke 138,140 wird bei der hier beschriebenen zweiten Ausführungsform mit Hilfe eines Exzenternockens 200 vorgenommen, der zwischen den beiden Spannstücken 138,140 liegt. Der in Fig. 5 und 8 in vergrößerter Darstellung schematisch im Querschnitt gezeigte Exzenternocken 200 weist zwei gegenüberliegende Nockenflächen 202,204 und zwei gegenüberliegende, ebene, parallele Wände 206,208 auf. Bei der Drehung des Exzenternockens aus der waagerechten Orientierung gemäß Fig. 5 in die senkrechte Position gemäß Fig. 4 werden die beiden Spannstücke 138,140 von den einander zugewandten Seiten her erfaßt und durch die Nockenflächen 202,204 auseinandergedrückt, bis sie hinter der Spannschulter 146 des Werkzeughalters verspannt sind. Die Drehung des Exzenternockens 200 erfolgt mit Hilfe eines Innensechskants, der sich in einer der Stirnflächen, im dargestellten Beispiel links in Fig. 4 und 7, befindet und die Aufnahme eines Steckschlüssels durch die radialen Bohrungen 142,144 gestattet.

Koaxial zu dem Exzenternocken 200 sind an dessen beiden Enden Klauenscheiben 212,214 befestigt, von denen zwei gegenüberliegende, nicht bezeichnete, radial nach außen vorspringende Klauen ausgehen, die in Fig. 3 und 6 erkennbar sind. Diese Klauen treten auf dem Wege in die Spreizstellung des Exzenternockens in Ausnehmungen 216,218 auf der Innenseite der Spannstücke ein, die in ihrem linken Endbereich in Fig. 3 und 6 eine nicht bezeichnete Hinterschneidung aufweisen, die es gestattet, beim Zurückdrehen des Exzenternockens von der Stellung der Fig. 6 in die Stellung der Fig. 3 die Spannstücke radial nach innen mitzunehmen und damit zu lösen.

Im Gegensatz zu der ersten Ausführungsform besteht bei der zweiten Ausführungsform keine ständige Verbindung zwischen den beiden Spannstücken und deren Spreizorgan. Der Exzenternocken muß daher geführt werden. Zu diesem Zweck sind zwei Laschen 220,222 vorgesehen, die die Ausnehmung in der Halterung, in der die beiden Spannstücke 138,140 geführt sind, auf gegenüberliegenden Seiten der Halterung 124 überbrücken und an beiden Enden mit Hilfe von Schrauben 224,226 an der Halterung 124 befestigt sind. Im Mittelbereich der beiden Laschen sind die beiden stirnseitigen Enden des Exzenternockens 200 drehbar gelagert.

Wegen der sehr flachen Kegelverbindung zwischen dem Außenkegel 116 und dem Innenkegel 114 besteht Selbsthemmung, so daß das Herausnehmen des Werkzeughalters auch dann schwierig sein kann, wenn die Spannstücke bereits gelöst sind. In Fig. 3 und 6 ist daher ein zentrischer Stift 228 gezeigt, der vom Boden der Ausnehmung des Werkzeughalters 112 ausgeht und durch eine nicht bezeichnete Bohrung in der Halterung 124 bis in deren Ausnehmung verläuft. Dort befindet sich der Stift, dessen Ende stark abgeschrägt oder abgerundet ist, in der Bewegungsbahn des Exzenternockens, so daß dieser bei der Rückkehr in die waagerechte Stellung gemäß Fig. 5 Druck auf den Stift ausübt und den Werkzeughalter auswirft.

## Patentansprüche

1. Spannvorrichtung zum Verbinden von Maschinenspindeln oder Grundhaltern mit Werkzeughaltern oder Werkzeugen für die spanabhebende Bearbeitung, mit zwei spreizbaren Spannstücken (38,40;138,140), die in einer in der Maschinenspindel (10;110) oder dem Grundhalter verankerten Halterung (24;124) radial verschiebbar geführt sind und in der gespreizten Stellung eine umlaufende Spannschulter Im Inneren des Werkzeughalters (12;112) hintergreifen, dadurch **gekennzeichnet**, daß sich die Spannstücke (38,40;138,140) quer zur Längsrichtung des Werkzeughalters (12;112) erstrecken und an den seitlich-äußeren Enden Spannflächen (48,50,52,54:148,150,152,154) aufweisen, die derart angeordnet sind, daß die insgesamt vier Spannflächen der beiden Spannstücke (38,40;138,140) jeweils in Winkelabständen von etwa 90° auf dem Umfang der Spannschulter verteilt sind.

2. Spannvorrichtung nach Anspruch 1, dadurch **gekennzeichnet**, daß die Spannstücke (38,40) gegenläufige Gewindebohrungen aufweisen, die gegenläufige Gewindeabschnitte einer Differentialgewindespindel (36) aufnehmen.

3. Spannvorrichtung nach Anspruch 2, dadurch **gekennzeichnet**, daß die Differentialgewindespindel (36) an einem Ende eine Eingriffseinrichtung für ein Drehwerkzeug aufweist, und daß in Verlängerung der Differentialgewindespindel (36) miteinander fluchtende, radiale Bohrungen (42,44) in der Maschinenspindel (10) und dem Werkzeughalter (12) vorgesehen sind.

4. Spannvorrichtung nach einem der vorhergehenden Ansprüche, dadurch **gekennzeichnet**, daß die Spannstücke (38,40) in gegenüberliegenden Taschen (30,32) einer im wesentlichen zylindrischen Halterung (24) verschiebbar geführt sind.

5. Spannvorrichtung nach Anspruch 4, dadurch **gekennzeichnet**, daß die Spannstücke (38,40) auf der in Richtung des Werkzeughalters (12) liegenden Radialfläche Schrägflächen (62) aufweisen, und daß in der Halterung achsparallele, längsverschiebbare Stifte (56,58) vorgesehen sind, die mit einem Ende in die Taschen (30,32) eintreten und auf die die Schrägflächen (62) beim Zusammenziehen der Spannstücke (38,40) auflaufen, während die anderen Enden der Stifte (56,58) gegen einen inneren Boden (64) des Werkzeughalters (12) anliegen.

6. Spannvorrichtung nach Anspruch 1, dadurch **gekennzeichnet**, daß zum Spreizen der Spannstücke (138,140) ein zwischen den Spannstücken liegender, drehbarer Exzenternocken (200) mit zwei gegenüberliegenden Nockenflächen (202,204) vorgesehen ist.

7. Spannvorrichtung nach Anspruch 6, dadurch **gekennzeichnet**, daß mit dem Exzenternocken (200) wenigstens zwei radial vorspringende Klauen (212,214) verbunden sind, die derart in hinterschnittene Taschen (216,218) auf der Innenseite der Spannstücke (138,140) eintreten, daß sie beim Lösen des Exzenternockens (200) eine radial nach innen gerichtete Zugwirkung auf die Spannstücke ausüben.

8. Spannvorrichtung nach Anspruch 6 oder 7, dadurch **gekennzeichnet**, daß die Spannstücke (138,140) radial verschiebbar in einer Ausnehmung der Halterung (124) geführt sind und daß die Ausnehmung an beiden Stirnseiten des Exzenternockens (200) durch Laschen (220,222) überbrückt wird, die an beiden Enden mit der Halterung (124) verbunden sind und im Mittelbereich drehbar den Exzenternocken (200) lagern.

9. Spannvorrichtung nach Anspruch 7 oder 8, dadurch **gekennzeichnet**, daß in der Bewegungsbahn einer der Nockenflächen (202,204) des Exzenternockens (200) wenigstens eine mit dem Werkzeughalter (112) verbundene Schrägfläche (228) ausgebildet ist, auf die die Nockenfläche beim Lösen der Spannstücke aufläuft und damit den Werkzeughalter ausstößt.

10. Spannvorrichtung nach Anspruch 9, dadurch **gekennzeichnet**, daß die Schrägfläche am Kopf eines vom Werkzeughalter (112) ausgehenden Stiftes (228) ausgebildet ist.

11. Spannvorrichtung nach einem der Ansprüche 6 bis 10, dadurch **gekennzeichnet**, daß der Exzenternocken an wenigstens einem Ende eine Eingriffseinrichtung (210) zum Ansetzen eines Werkzeugs aufweist und daß in axialer Verlängerung des Exzenternockens miteinander fluchtende radiale Bohrungen (142,144) in der Maschinenspindel (110) und dem Werkzeughalter (112) vorgesehen sind.

## Claims

1. Clamping device for connecting machine spindles or base holders to machining tool-holders or tools, with two clamping elements (38, 40; 138, 140) which can be spread out and are guided for moving radially in a support (24; 124) anchored in the machine spindle (10; 110) or in the base holder and which, in the spread-out position, engage behind a circular clamping shoulder inside the tool-holder (12; 112), **characterized in that** the clamping elements (38, 40; 138; 140) extend transverse the longitudinal direction of the tool holder (12; 112) and, on the laterally outer ends, have clamping surfaces (48, 50, 52, 54; 148, 150, 152, 154) arranged in a manner such that, altogether, four clamping surfaces of the two clamping elements (38, 40; 138, 140) are distributed at respective angular spacings of approximately 90° on the circumference of the clamping shoulder.

2. Clamping device according to Claim 1, **characterized in** the clamping elements (38, 40) have holes with opposed threads housing portions of a differential threaded screw (36) having opposed threads.

3. Clamping device according to Claim 2, **characterized in that** the differential threaded screw (36) has, at one end, an engagement device for a rotating tool, and in that radial holes (42, 44) are provided in the machine spindle (10) and in the tool holder (12) and extend from the differential threaded screw (36) in alignment with one another.

4. Clamping device according to any one of the preceding claims, **characterized in that** the clamping elements (38, 40) are guided for movement in opposed cavities (30, 32) of a substantially cylindrical support (24).

5. Clamping device according to Claim 4, **characterized in that** the clamping elements (38, 40) have inclined surfaces (62) on the radial surfaces facing towards the tool holder (12), and in that pins (56, 58) movable longitudinally on parallel axes in the support extend into the cavities (30, 32) at one end and are struck by the inclined surfaces (62) during the drawing-together of the clamping elements (38, 40), whereas the other ends of the pins (56, 58) abut an inner base (64) of the tool holder (12).

6. Clamping device according to Claim 1, **characterized in that** a rotatable cam (200) with two opposed cam surfaces (202, 204) is disposed between the clamping elements for spreading out the clamping elements (138, 140).

7. Clamping device according to Claim 6, **characterized in that** at least two radially projecting claws (212, 214) are connected to the cam (200) and enter undercut cavities (216, 218) on the inner side of the clamping elements (138, 140) in a manner such that they exert a radially inwardly-directed pulling action on the clamping elements when the cam (200) is released.

8. Clamping device according to Claim 6 or Claim 7, **characterized in that** the clamping elements (138, 140) are guided for radial movement in a recess of the support (124), and in that the recess is bridged on both end faces of the cam (200) by plates (220, 222) which are connected to the support (124) at both ends and support the cams (200) rotatably in the central region.

9. Clamping device according to Claim 7 or Claim 8, **characterized in that**, at least one inclined surface (228) connected to the tool holder (112) is formed in the path of movement of one of the cam surfaces (202, 204) of the cam (200) and is struck by the cam surface when the clamping elements are released, thus ejecting the tool holder.

10. Clamping device according to Claim 9, **characterized in that** the inclined surface is formed on the head of a pin (228) projecting from the tool holder (112).

11. Clamping device according to any one of Claims 6 to 10, **characterized in that** at least one end of the cam has an engagement device (210) for the application of a tool, and in that radial holes (142, 144) are provided in the machine spindle (110) and in the tool holder (112) and extend axially from the cam in alignment with one another.

## Revendications

1. Dispositif de serrage pour le raccordement de broches de machine ou de supports de base avec des porte-outils ou des outils pour l'usinage par enlèvement de copeaux, comprenant deux blocs de serrage écartables (38, 40, 138, 140) qui sont guidés radialement de manière à pouvoir être déplacés dans un support (24, 124) ancré dans la broche de machine (10; 110) ou dans le support de base et qui, dans la position écartée, s'engagent derrière un épaulement circulaire a' l'intérieur du porte-outil (12, 112), caractérisé en ce que les blocs de serrage (38, 40, 138, 140) s'étendent perpendiculairement à la direction longitudinale du porte-outil (12, 112) et présentent aux extrémités latéralement extérieures des surfaces de serrage (48, 50, 52, 54, 148, 150, 152, 154) qui sont disposées de telle façon que les quatre surfaces de serrage des deux blocs de serrage (38, 40, 138, 140) réparties respectivement à des intervalles angulaires d'environ 90° sur la circonférence de l'épaulement de serrage.

2. Dispositif de serrage selon la revendication 1, caractérisé en ce que les blocs de serrage (38, 40) présentent des taraudages opposés qui reçoivent des sections filetées opposées d'une broche filetée différentielle (36).

3. Dispositif de serrage selon la revendication 2, caractérisé en ce que la broche filetée différentielle (36) comporte à l'une de ses extrémités un dispositif d'engagement pour un outil tournant, et que dans le prolongement de la broche filetée différentielle (36), des alésages radiaux (42, 44) alignés l'un avec l'autre sont prévus dans la broche de machine (10) et dans le porte-outil (12).

4. Dispositif de serrage selon l'une des revendications précédentes, caractérisé en ce que les blocs de serrage (38, 40) sont guidés de manière mobile dans des poches (30, 32) opposées d'un support (24) de forme sensiblement cylindrique.

5. Dispositif de serrage selon la revendication 4, caractérisé en ce que les blocs de serrage (38, 40) présentent des surfaces inclinées (62) disposées sur la surface radiale orientée vers le porte-outil (12), et que dans le support sont prévues des broches (56, 58) parallèles à l'axe et mobiles dans le sens longitudinal, dont l'une des extrémités pénètre dans les poches (30, 32) et sur lesquelles montent les surfaces inclinées (62) lors du serrage des blocs de serrage (38, 40), alors que les autres extrémités des broches (56, 58) sont appliquées contre un fond intérieur (64) du porte-outil (12).

6. Dispositif de serrage selon la revendication 1, caractérisé en ce qu'il comprend, pour l'écartement des blocs de serrage (138, 140), une came d'excentrique (200) tournante disposée entre les blocs de serrage, avec deux surfaces de came (202, 204) opposées.

7. Dispositif de serrage selon la revendication 6, caractérisé en ce qu'à la came d'excentrique (200) sont rattachées au moins deux griffes (212, 214) radialement en saillie lesquelles s'engagent dans des poches (216, 218) contre-dépouillées du côté intérieur des blocs de serrage (138, 140), de telle sorte que, lors du déblocage de la came d'excentrique (200), elles exercent sur les blocs de serrage une traction dirigée radialement vers l'intérieur.

8. Dispositif de serrage selon la revendication 6 ou 7, caractérisé en ce que les blocs de serrage (138, 140) sont guidés de manière mobile dans le sens radial dans un évidement du support (124), et que l'évidement sur les deux surfaces frontales de la came d'excentrique (200) est franchi par des pattes (220, 222) lesquelles sont rattachées aux deux extrémités au support (124) et dont la zone médiane supporte la came d'excentrique (200) de manière tournante.

9. Dispositif de serrage selon la revendication 7 ou 8, caractérisé en ce que dans la trajectoire d'une des surfaces de came (202, 204) de la came d'excentrique (200) est formée au moins une surface inclinée (228) solidaire du porte-outil (112) sur laquelle la surface de came monte lors du déblocage des éléments de serrage en éjectant ainsi le porte-outil.

10. Dispositif de serrage selon la revendication 9, caractérisé en ce que la surface inclinée est formée sur la tête d'une broche (228) partant du porte-outil (112).

11. Dispositif de serrage selon l'une des revendications 6 à 10, caractérisé en ce que la came d'excentrique comporte au moins à l'une de ses extrémités un dispositif d'engagement (210) pour l'introduction d'un outil, et que dans le prolongement axial de la came d'excentrique, des alésages radiaux (142, 144) alignés l'un avec l'autre sont prévus dans la broche de machine (110) et dans le porte-outil (112).
